# EUROPÄISCHE PATENTSCHRIFT

(11) **EP 2 005 283 B1**
(45) Veröffentlichungstag und Bekanntmachung des Hinweises auf die Patenterteilung: **17.10.2018**
(21) Anmeldenummer: 07723164.5
(22) Anmeldetag: 10.03.2007
(51) Int. Cl.: G06F 3/048

(54) **VORRICHTUNG ZUM ANSTEUERN VON MARKANTEN BILDPUNKTEN**
DEVICE FOR ACCESSING SPECIFIC IMAGE POINTS
DISPOSITIF DE CIBLAGE DE POINTS MARQUANTS

(30) Priorität: 11.04.2006 DE 102006016902
(43) Veröffentlichungstag der Anmeldung: 24.12.2008
(73) Patentinhaber: Bayerische Motoren Werke Aktiengesellschaft, 80809 München (DE)
(72) Erfinder: KUENZNER, Hermann, 85356 Freising (DE)
(86) Internationale Anmeldenummer: PCT/EP2007/002112
(87) Internationale Veröffentlichungsnummer: WO 2007/118561

(56) Entgegenhaltungen:
- EP-A- 1 262 740
- EP-A2- 0 366 132
- EP-A2- 0 836 157
- DE-A1- 19 836 262
- DE-A1- 19 948 562
- US-A- 5 945 927
- US-B1- 6 983 203

## Beschreibung

Die Erfindung bezieht sich auf eine Vorrichtung zum Ansteuern von markanten Bildpunkten eines in einer Bildschirmanzeige wiedergegebenen Bildes eines Landkartenausschnitts mittels eines Bedienteils, das um seine Längsachse drehbar ist.
Die Darstellung von Landkartenausschnitten erfolgt beispielsweise in Navigationsvorrichtungen in Kraftfahrzeugen. Eine solche Vorrichtung ist aus DE 199 48 562 A1 bekannt.
Ein für die Erfindung geeignetes Bedienteil stellt ein bi-direktionaler Drehschalter mit Raststellungen dar, wie er aus EP 0 366 132 A2 bekannt ist. Ferner lehrt EP 1 262 740 A2 ein Bedienteil zur Steuerung eines Cursors, wobei das Bedienteil beispielsweise einen Drehsteller aufweist.

EP 0 836 157 A2 schlägt eine Informationsverarbeitungsvorrichtung vor, wobei jeweils eines einer Menge von kreisförmig angeordneten Piktogrammen ausgewählt werden kann. Zur Auswahl eines dem ausgewählten Piktogramm benachbarten Piktogramms sind eine linke und eine rechte Pfeiltaste vorgesehen.
Zum Ansteuern von Bildpunkten ist es prinzipiell möglich, einen Suchstrahl vorzusehen und ihn mit dem Bedienteil an den jeweils gewünschten Bildpunkt zu verfahren. DE 198 36 262 A1 schlägt vor, Bildpunkte mittels einer beweglichen Anzeigemarke anzusteuern. Zur Darstellung der Bewegungsrichtung der Anzeigemarke kann ein Fahrstrahl vorgesehen werden. Ferner wird ausgeführt, dass der Bediener über einen bereits ausgeführten Drehwinkel eines Drehschalters durch haptische Rückmeldung informiert werden kann. Eine derartige Lösung kann beispielsweise dann, wenn nur wenige Bildpunkte in der Bildschirmanzeige vorhanden sind, mühsam sein und zu langen Verfahrwegen und -zeiten führen.

Der Erfindung liegt die Aufgabe zu Grunde, eine Vorrichtung der eingangs genannten Art zu schaffen, die ein schnelles und sicheres Anfahren der markanten Bildpunkte ermöglicht.

Die Erfindung löst diese Aufgabe durch die Merkmale des Patentanspruchs 1.

Das Bedienteil ist ohnehin in der Regel mit Raststellungen drehbar. Mit Hilfe des um ein Zentrum drehbaren Suchstrahls und dessen an die Lage der markanten Bildpunkte angepassten Drehwinkelveränderung lässt sich der Drehwinkel variabel an die Lage der Bildpunkte derart anpassen, dass in jeder Raststellung der Suchstrahl genau einen markanten Bildpunkt trifft.

Pro Raststellung wird genau ein Bildpunkt angefahren. Wird der jeweilige Bildpunkt vom Suchstrahl getroffen, wird eine zusätzliche Information des jeweiligen Bildpunktes auf dem Bildschirm dargestellt. Dies kann selbständig nach einer definierten Zeit von einigen Sekunden erfolgen, sofern der Suchstrahl auf dem jeweiligen Bildpunkt verharrt, oder durch eine Axialbewegung des Bedienteils initiiert sein.

Vorteilhafte Ausgestaltungen der Erfindung sind in den weiteren Patentansprüchen angegeben und werden im Folgenden an Hand der Zeichnung weiter erläutert. Die Zeichnung zeigt in
- Fig. 1: ein Ausführungsbeispiel der Erfindung in einem ersten Zustand und in
- Fig. 2: einen zugehörigen zweiten Zustand.

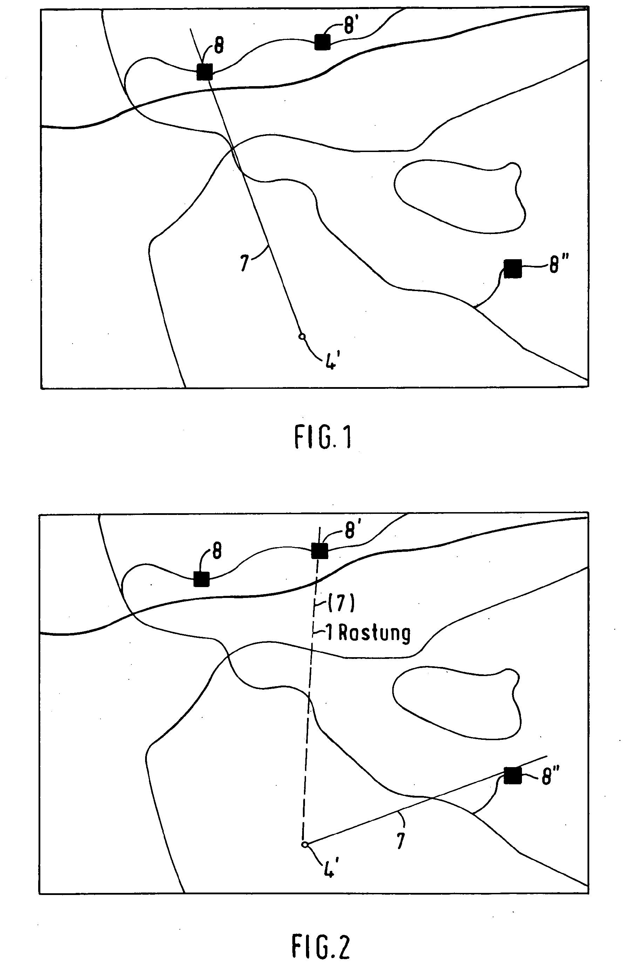

In Fig. 1 ist die im Rahmen der Erfindung vorgesehene Bildschirmanzeige prinzipiell dargestellt. Innerhalb einer Anzeigefläche, die gleich der Bildfläche eines Bildschirms ist, befindet sich ein Bild eines Landkartenausschnitts und darin mehrere markante Bildpunkte 8, 8', 8", etc. Beim Bedienteil handelt es sich um einen Dreh-Druck-Knopf, wie er aus der EP 0 366 132 B1 bekannt ist.

Um die Bildpunkte 8, 8', 8", etc anzufahren, kann hierfür ein separater Betriebsmodus vorgesehen sein, der im Rahmen der durch das Bedienteil durchzuführenden Menüsteuerung (nicht dargestellt) ausgewählt wird. Alternativ kann das Bedienteil zur Einstellung des Betriebsmodus zusätzlich ausgehend von seiner senkrechten Ausgangslage um seinen Fußpunkt ausgelenkt werden.

In jedem der beiden Fälle soll zusätzlich der Drehwinkel des Bedienteils gerastert einstellbar sein.

In dem besonderen Betriebsmodus wird durch das Bedienteil ein von einem Zentrum 4' ausgehender Suchstrahl 7 in seinem Drehwinkel verändert.

Der Suchstrahl 7 ist nach Art eines um das Zentrum 4' drehbaren Richtungsvektor gestaltet, dessen Drehwinkel mit jeder Raststellung des Bedienteils verändert wird. Sind innerhalb des Landkartenausschnitts mehrere Objekte vorgesehen, wird der Drehwinkel des Suchstrahls 7 variabel an die Lage der Bildpunkte derart angepasst, dass in jeder Raststellung der Suchstrahl genau einen markanten Bildpunkt trifft, d. h. der Suchstrahl wird mit jeder Raststellung des Bedienteils zu einem besonderen Bildpunkt auf der Karte weitergeschaltet. Das ist z. B. zum Identifizieren von POI's (z. B. Tankstellen) nützlich.

Das Zentrum 4' kann in der Mitte des Landkartenausschnitts oder beispielsweise am unteren Rand des Ausschnitts liegen.

Ausgehend von der in Figur 1 gezeigten Ausgangslage, in der der Suchstrahl 7 als Suchstrahl das Quadrat 8 "trifft", können die weiteren Objekte des Landkartenausschnitts (hier als Quadrate mit 8' und 8" dargestellt), nacheinander und unmittelbar "getroffen" werden, indem das Bedienteil jeweils um eine Raststellung nach rechts verdreht wird. Fig. 2 zeigt den Suchstrahl auf dem Bildpunkt 8", nachdem das Bedienteil genau um zwei Raststellungen im Uhrzeigersinn verdreht wurde.

Der Ausgangs-Bildpunkt für den Suchstrahl bei Einstellen des Betriebsmodus kann beliebig sein, beispielsweise bei dem in einer vorangegangenen Betriebsphase zuletzt ausgewählten Bildpunkt oder aber bei dem Bildpunkt sein, der möglichst mittig oder am Weitesten nach links oder rechts angeordnet ist.

Die Bewegung des Bedienteils kann ggf. durch mechanische Anschläge begrenzt sein. Ebenso ist es möglich, den Schräg-Winkel, unter dem sich der Suchstrahl 7 bewegt, durch eine entsprechende Arbeitsweise der Software, die die Umsetzung der per Bedienteil aufgegebenen Steuerungsbefehle in entsprechende Suchstrahl-Bewegungen vornimmt, zu begrenzen.

Der Schräg-Winkel der Suchstrahl-Bewegung kann ebenfalls gerastet bis hin zum Maximalwert verändert werden. Eine Weiterbewegung des Bedienteils erfolgt dann leer, d.h., der Suchstrahl bewegt sich dann nicht mehr. Bei einer Bewegung des Bedienteils in entgegensetzter Richtung, kann der Suchstrahl sofort wieder in der entgegengesetzten Richtung verdreht werden.

Schließlich kann wie an sich bekannt, das Bedienteil axial beweglich sein und bei einer Axialbewegung des Bedienteils eine dem jeweiligen vom Suchstrahl getroffenen Bildpunkt zugeordnete Information wiedergegeben werden. Hier handelt es sich beispielsweise um Informationen über den durch das Quadrat 8 symbolisierten Ort.

Auf diese Weise ist es möglich, verschiedene Bildpunkte innerhalb eines Landkartenausschnitts rasch und sicher anzufahren.

## Patentansprüche

1. Vorrichtung zum Ansteuern von markanten Bildpunkten (8, 8', 8") eines in einer Bildschirmanzeige wiedergegebenen Landkartenausschnitts mittels eines Bedienteils, das mit Raststellungen um seine Längsachse drehbar ist, wobei das Bedienteil einen um ein Zentrum (4') drehbaren Suchstrahl (7) steuert und dessen Drehwinkel mit jeder Raststellung verändert, wobei ein jeweiliger Bildpunkt (8, 8', 8") dadurch angefahren wird, dass der Suchstrahl (7) den jeweiligen Bildpunkt (8, 8', 8") trifft, **dadurch gekennzeichnet, dass** der Drehwinkel variabel an die Lage der Bildpunkte (8, 8', 8") derart angepasst ist, dass in jeder Raststellung der Suchstrahl (7) genau einen markanten Bildpunkt (8, 8', 8") trifft, und dass entweder
- das Bedienteil axial beweglich ist und die Vorrichtung eingerichtet ist, bei einer Axialbewegung des Bedienteils eine dem jeweiligen vom Suchstrahl (7) getroffenen Bildpunkt (8, 8', 8") zugeordnete Information wiederzugeben oder
- die Vorrichtung eingerichtet ist, nach einer definierten Zeit von einigen Sekunden eine dem jeweiligen vom Suchstrahl (7) getroffenen Bildpunkt (8, 8', 8") zugeordnete Information wiederzugeben, sofern der Suchstrahl (7) auf dem getroffenen Bildpunkt (8, 8', 8") verharrt.

2. Vorrichtung nach Anspruch 1, **dadurch gekennzeichnet, dass** das Zentrum (4') in der Mitte oder am unteren Rand des Landkartenausschnitts liegt.

## Claims

1. A device for accessing specific image points (8, 8', 8") of a geographical map portion reproduced in a screen display by means of a control panel, which is rotatable about its longitudinal axis with latching positions, wherein the control panel controls a search beam (7) rotatable about a centre (4') and the rotary angle thereof changes with each latching position, wherein a particular image point (8, 8', 8") is approached in that the search beam (7) lands on the particular image point (8, 8', 8"), **characterised in that** the rotary angle is matched in a variable manner to the position of the image points (8, 8', 8") in such a way that in each latching position the search beam (7) lands exactly on a specific image point (8, 8', 8"), and **in that** either
- the control panel is axially movable and the device is designed, in the event of an axial movement of the control panel, to reproduce a piece of information associated with the particular image point (8, 8', 8") landed on by the search beam (7) or
- the device is designed, after a defined time lasting for a few seconds, to reproduce a piece of information associated with the particular image point (8, 8', 8") landed on by the search beam (7), provided the search beam (7) remains on the landed-on image point (8, 8', 8").

2. A device according to claim 1, **characterised in that** the centre (4') lies in the middle or at the lower edge of the geographical map portion.

## Revendications

1. Dispositif permettant de se diriger vers des points d'image marquante (8, 8', 8") d'un segment de carte géographique reproduit sur un écran d'affichage au moyen d'une unité de commande qui peut être déplacée en rotation autour de son axe longitudinal, avec des positions d'arrêt, l'unité de commande commandant un faisceau de recherche (7) mobile en rotation autour d'un centre (4'), et son angle de rotation variant avec chaque position d'arrêt, chaque point d'image (8, 8', 8") étant abordé de sorte que le faisceau de recherche (7) l'atteigne,
**caractérisé en ce que**
l'angle de rotation est adapté de façon variable à la position des points d'image (8, 8', 8") de sorte que, dans chaque position d'arrêt le faisceau de recherche (7) atteigne exactement un point d'image marquant, (8, 8', 8"), et **en ce que** :
- l'unité de commande est mobile axialement et le dispositif est réalisé de manière à permettre de reproduire, en présence d'un déplacement axial de l'unité de commande une information associée au point d'image (8, 8', 8") respectif atteint par le faisceau de recherche (7), ou
- le dispositif est réalisé de manière à permettre, après une durée définie de quelques secondes de reproduire une information associée au point d'image (8, 8', 8") frappé par le faisceau de recherche (7), dans la mesure où ce faisceau de recherche (7) se maintien sur le point d'image (8, 8', 8") atteint.

2. Dispositif conforme à la revendication 1,
**caractérisé en ce que**
le centre (4') est situé au milieu ou sur le bord inférieur du segment de carte géographique.
